(19) Europäisches Patentamt
European Patent Office
Office européen des brevets

(11) **EP 1 849 599 B2**

(12) **NOUVEAU FASCICULE DE BREVET EUROPEEN**
Après la procédure d'opposition

(45) Date de publication et mention de la décision concernant l'opposition:
**22.08.2018 Bulletin 2018/34**

(45) Mention de la délivrance du brevet:
**08.09.2010 Bulletin 2010/36**

(21) Numéro de dépôt: **07290409.7**

(22) Date de dépôt: **04.04.2007**

(51) Int Cl.:
**B32B 37/14** [(2006.01)]     **B29C 55/18** [(2006.01)]
**A61F 13/15** [(2006.01)]

(54) **Procédé et dispositif pour impartir de l'élasticité à un stratifié non tissé-elastomère et stratifié ainsi obtenu**

Verfahren und Vorrichtung um ein Faservlies-Elastomer-Laminat mit Elastizität zu versehen und dadurch hergestelltes Laminat

Method and apparatus for providing elasticity to a non-woven elastomer laminate and laminate thereby produced

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.04.2006 FR 0603880**

(43) Date de publication de la demande:
**31.10.2007 Bulletin 2007/44**

(73) Titulaire: **Aplix**
**44850 Le Cellier (FR)**

(72) Inventeurs:
* **Ducauchuis, Jean-Pierre**
**44100 Nantes (FR)**
* **Marche, Thierry**
**44450 La Chapelle-Basse-Mer (FR)**

(74) Mandataire: **Eidelsberg, Olivier Nathan et al**
**Cabinet Aymard & Coutel**
**22 Avenue de Friedland**
**75008 Paris (FR)**

(56) Documents cités:
**US-A- 4 834 741        US-A- 5 156 793**
**US-A- 5 167 897        US-A- 5 422 172**
**US-A- 5 861 074        US-A1- 2003 207 640**
**US-A1- 2004 121 687**

* **ROISUM D.R.: 'The mechanics of web handling', vol. CHPT 4, 1998, TAPPI PRESS, ATLANTA pages 49 - 64**
* **- "Why Tension?" - Timothy Walther - http://pffc-online.com/web lines/why tension 0205/index.html-published 1 Februar 2005**
* **Declaration of David R. Roisum (3 June 2011) - An expert opinion**
* **Experimental testing carried out in accordance with the teachings of us 5,422,172**
* **Further declaration od Davis R. Roisum**
* **ROISUM D.R.: 'Secrets of a Level Process and Product', 25 Avril 2001, EMA SHORTCOURSE, CHICAGO**
* **Declaration of Katherine Edman - An expert opinion**

**EP 1 849 599 B2**

**Description**

La présente invention se rapporte à un stratifié comportant au moins un film élastique, notamment à base d'élastomère, notamment thermoplastique, et au moins une couche de non-tissé fixée au film élastique.

Un stratifié comportant au moins un film élastique, notamment à base d'élastomère, notamment thermoplastique, et au moins une couche de non-tissé fixée au film élastique, est notamment utilisé dans des applications dans le domaine des vêtements, en particulier jetables, tels que les couches-culottes ou les dispositifs pour l'incontinence des adultes, ou dans le domaine médical sous la forme de bandeaux élastiques. Dans le domaine des couches-culottes, ces stratifiés sont classiquement utilisés dans les parties formant la ceinture autour de la taille du bébé. En particulier, ces stratifiés sont utilisés pour réaliser les pattes ou oreilles élastiques assurant le maintien de la couche sur le bébé et supportant entre autres un élément auto-agrippant. En général, la fixation de la couche ou voile de non-tissé au film élastique se fait par interposition d'un liant, notamment de la colle, soit de manière continue entre le non-tissé et l'élastique, soit en des zones discrètes, notamment par points ou lignes. La fixation du non-tissé et du film élastique fait qu'il est nécessaire d'impartir de l'élasticité au stratifié en l'étirant. Il s'agit d'une opération classiquement appelée, dans le domaine des couches-culottes, activation. En effet, avant que le stratifié n'ait été étiré, il n'a pas véritablement d'élasticité, ou du moins dans le cas où l'on utilise un non-tissé ayant une légère élasticité, il n'a comme élasticité que celle, légère, relative au non-tissé. Après activation, c'est-à-dire après étirage du stratifié dans son ensemble, le stratifié va avoir, en raison d'une sorte de cassure ou désolidarisation ou décohésion des fibres du non-tissé, une élasticité qui correspondra à celle du film élastique dont les capacités élastiques auront ainsi été libérées.

Pour effectuer cette activation, il est connu de faire passer le stratifié sous la forme d'une nappe ou complexe entre deux rouleaux dentés dont les dents engrènent les unes dans les autres. Les dents des rouleaux s'étendent sensiblement perpendiculairement à la direction de déroulement du ruban (sens machine). L'engrenage mutuel des dents alors que le stratifié se trouve entre les deux dentures a pour effet d'étirer le stratifié. A la sortie des deux rouleaux, le stratifié reprend sensiblement la forme qu'il avait avant d'y entrer. Cependant, la déformation qui a eu lieu fait que, maintenant, le stratifié dans son ensemble a de l'élasticité, à savoir une élasticité transversale entre sa largeur de départ et finale (à l'état non étiré) et la largeur maximale qu'il a quand il se trouve entre les deux rouleaux dentés. Le stratifié a ainsi été activé.

On connaît déjà dans l'art antérieur, et notamment du brevet américain US-A-5 167 897, le fait de réaliser une activation de ce genre. La nappe y est déroulée avec une tension longitudinale sensiblement nulle et les bords périphériques extérieurs du stratifié, voisins de la région que l'on souhaite activer, sont maintenus, par exemple par des systèmes à dépression ou à courroies, pendant l'action des rouleaux dentés. Le dispositif utilisé dans son ensemble est assez compliqué, nécessitant en particulier des systèmes complexes pour le maintien des bords périphériques extérieurs voisins de la région du stratifié à activer. En outre, le stratifié obtenu par ces procédés de l'art antérieur présente des risques de délamination ou décollement au niveau du bord extérieur du stratifié entre le non tissé et l'élastomère, de sorte qu'il est nécessaire de prévoir soit des colles à fort pouvoir collant, soit une ligne de soudure, notamment à ultra sons, le long de ces bords.

La présente invention vise à surmonter les inconvénients de l'art antérieur en proposant un procédé (non revendiqué) pour impartir de l'élasticité à un stratifié du genre mentionné ci-dessus qui, d'une part, est plus simple à mettre en oeuvre et notamment ne nécessite pas de maintenir les bords périphériques extérieurs voisins de la partie du stratifié que l'on souhaite activer et qui, d'autre part, permet d'obtenir un stratifié dont la liaison entre l'élastomère et le non tissé a moins tendance au décollement au niveau des bords extérieurs, de sorte qu'il peut être possible de ne pas prévoir de lignes de soudures le long de ces bords.

Un procédé pour impartir de l'élasticité à un stratifié comportant au moins un film élastique ayant une largeur et au moins une couche de non-tissé fixée au film, notamment par interposition d'un liant, notamment de la colle, qui comprend les étapes dans lesquelles :
on déroule le stratifié sous la forme d'une nappe pour le faire passer entre deux dentures dont les dents engrènent les unes dans les autres dans une direction perpendiculaire au plan du stratifié, pour ainsi étirer le stratifié dans le sens de sa largeur, est caractérisé en ce que :
on impartit une tension au ruban dans le sens longitudinal ou sens machine pendant son déroulement entre les dentures, notamment en prévoyant un rouleau tendeur, notamment en aval des dentures.

On obtient ainsi un système très simple qui, en particulier, ne nécessite pas de prévoir des moyens compliqués qui maintiennent les bords périphériques extérieurs du stratifié à activer pendant son activation et qui, pourtant, permet d'obtenir un stratifié dont la liaison entre l'élastomère et le non tissé, notamment au niveau des bords extérieurs est plus résistante au décollement, de sorte qu'éventuellement il serait possible de se passer d'une ligne de soudure à ultrason ou de prévoir des colles moins coûteuses que dans le cas des stratifiés de l'art antérieur.

Suivant un mode de réalisation, on impartit une tension d'au moins 1 Newton (N) pour 10 mm de largeur et 100g/m$^2$ de ladite une largeur du stratifié à activer, de préférence la tension est d'au moins 2 N/10mm/100g/m$^2$, plus préférablement d'au moins 2,5, par exemple comprise entre 1,2 et 8, en particulier entre 2 et 5, par exemple égale à 2,6.

Suivant un mode de réalisation, on impartit une tension d'au moins 0,64 Newton (N) pour 10mm de largeur et 100g/m² de couche de non tissé, de préférence la tension est d'au moins 0,9 N/10mm/100g/m² de non tissé, plus préférablement d'au moins 1,2, par exemple comprise entre 0,65 et 3, en particulier entre 1 et 2, par exemple égale à 1,3.

Suivant un mode de réalisation préféré, le film élastomère est extrudé et déposé sur la couche de non tissé dans un état ramolli, le complexe étant ensuite activé.

Le complexe n'a ainsi que une ou deux couches de non tissé et des couches de colles intermédiaire.

Suivant un mode de réalisation, les moyens pour impartir de la tension sont constitués d'au moins un rouleau pantin fou, notamment deux rouleaux disposés en amont et en aval des première et deuxième dentures.

Suivant un mode de réalisation, les première et deuxième dentures sont chacune constituées par des rouleaux dentés.

La présente invention se rapporte . à un stratifié comportant au moins une couche de non tissé, de préférence deux couches de non tissé, et au moins un film élastique ayant une largeur et fixé à la dite au moins une couche, notamment en étant pris en sandwich entre les deux couches de non tissé, notamment par interposition d'un liant, notamment de la colle, le stratifié en section transversale, dans la dite largeur, ayant une largeur activée(dans laquelle l'élasticité n'est pas sensiblement nulle, c'est à dire est supérieur à celle du stratifié seul), inférieure ou égale à la dite largeur et dans laquelle il a été activé, la largeur activée ayant une région de gauche et une région de droite, l'élasticité du stratifié, mesurée notamment par le test de l'allongement à 10 Newton, étant croissante à partir du bord gauche de la largeur activée sur au moins une partie de la région de gauche et décroissante sur au moins une partie de la région de droite vers le bord droit de la largeur activée.

Contrairement au stratifié de l'art antérieur, qui ont une élasticité dans la largeur activée sensiblement constante ou uniforme, le stratifié suivant l'invention a une élasticité plus importante vers le centre que dans les parties de bord de ladite largeur. Ce gradient (ou variation) de l'élasticité, et notamment le fait que l'élasticité soit moindre au niveau des bords fait qu'en utilisation, notamment dans les couches culottes, le stratifié a une moindre propension au décollement au niveau des bords extérieurs de l'interface entre le ou les non tissés et l'élastomère, sous l'effet des nombreux étirements successifs réalisés par l'utilisateur, pendant l'utilisation et chaque fois qu'il ferme la couche.

Suivant un mode de réalisation préféré de l'invention, la courbe donnant l'élasticité telle que mesurée par l'allongement à 10 Newton (en% d'allongement) en fonction de la distance en mm du point de mesure au bord gauche de la dite largeur activée présente en chaque point de mesure dans la partie croissante, ou région de gauche, une pente sensiblement non nulle qui est inférieure à 50 %/mm, de préférence inférieure à 25%/m, plus préférablement inférieure à 20%/mm, par exemple inférieure à 15 %/mm, par exemple comprise entre 50 et 5, par exemple comprise entre 25 et 5, notamment entre 15 et 5.

Suivant un mode de réalisation préféré, le stratifié comporte au moins deux films élastiques ayant chacun une largeur, la courbe d'élasticité de la largeur activée de droite étant symétrique comme dans un miroir de la courbe d'élasticité de la largeur activée de gauche, et notamment la pente en valeur absolue de la courbe d'élasticité dans la partie droite de décroissance de la largeur activée gauche étant inférieure ou égale à celle de la partie gauche de croissance de la largeur activée gauche, et notamment est inférieure à 20, notamment inférieure à 12, en particulier inférieure à 10, plus particulièrement inférieure à 7.

De préférence, la courbe d'élasticité présente un maximum pour un point de mesure sensiblement au milieu de ladite largeur de stratifié.

Aux dessins, il est représenté un mode de réalisation préféré de l'invention, donné uniquement à titre d'exemple, et dans lequel

la Figure 1 est une vue en perspective d'un dispositif ;
la Figure 2 est une vue en coupe transversale d'une partie schématisé du dispositif de la Figure 1 ;
la Figure 3 est une vue schématique d'un complexe obtenu par le procédé mis en oeuvre dans les dispositifs des Figures 1 et 2, ayant deux films élastiques ;
la Figure 4 est une vue en coupe transversale d'une partie du complexe de la figure 3, à l'état non étiré ;
la Figure 5 est une vue en coupe transversale de la partie du complexe de la figure 4, à l'état étiré;
la figure 6 est une vue en coupe transversale d'un complexe similaire à celui de la figure 3;
la figure 7 est une vue équivalente à la figure 6 pour le complexe de la figure 3 ;
la figure 8 représente un exemple de graphe donnant la courbe de variation de l'élasticité le long de la direction en largeur dans une largeur d'un stratifié suivant l'invention, dans le cas d'un stratifié de la figure 6 ; et
la figure 9 représente un exemple de graphe donnant la courbe de variation de l'élasticité le long de la direction en largeur dans une largeur d'un stratifié suivant l'invention, dans le cas d'un stratifié de la figure 7.

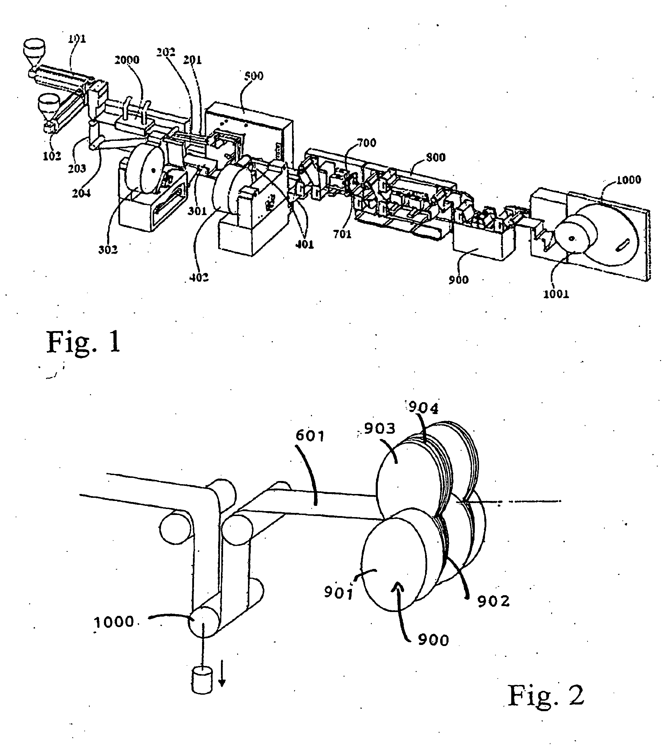

Le dispositif de la Figure 1 comporte deux extrudeurs 101, 102 qui forment par extrusion deux rubans 201, 202 de film élastomère qui, après refroidissement dans une unité 2000 de refroidissement intermédiaire, par des systèmes à courroie 203 et galet 204 régulés en température, sont transportés vers deux rouleaux qui reçoivent en même temps deux couches de non-tissé 301 et 401 pour y être fixés avec de la colle 501 entre les non-tissés dans une unité de fixation 500, les non tissés étant eux mêmes collés entre eux par la colle 501 dans les parties où il n'y a pas de film élastique. Le non-tissé 301 est déroulé à partir d'une bobine 302. Le deuxième non-tissé 401 est déroulé d'une bobine 402. Le complexe constitué des non-tissés 301 et 401 et des films élastiques 201, 202, à savoir le complexe 601, est ensuite découpé à la bonne largeur dans un système de découpe 700 en largeur comportant des couteaux 701 circulaires qui passent dans une unité de soudure 800 permettant une soudure des bords longitudinaux. Les non-tissés sont enfin activés en vue de les casser dans une unité 900 d'activation. L'unité 900 d'activation comporte un premier rouleau 901 ayant une denture 902 et un deuxième rouleau 903 ayant une denture 904. Les dents de la denture 901 engrènent dans les dents de la denture 904.

Un pantin fou de régulation de tension 1000 est disposé à l'entrée de l'unité 900 d'activation et fonctionne en coopération avec un moteur entraînant en rotation un des rouleaux dentée d'activation de manière à maintenir constante la tension longitudinale du stratifié pendant son activation.

La vitesse relative de déroulement du rouleau 1000 par rapport à la vitesse de déroulement des rouleaux dentées est telle que le complexe 601 subit une tension longitudinale pendant son déplacement, et notamment lorsqu'il est pris entre les dentures.

Cette tension longitudinale est réglée à au moins 1 Newton (N) pour 10 mm de largeur et $100gm^2$ de ladite largeur de stratifié à activer (c'est à dire du stratifié pris uniquement au niveau où il y a interface entre un élastomère et au moins une couche de non tissé), de préférence cette tension est d'au moins 2 $N/10mm/100gm^2$, plus préférablement d'au moins 2,5, par exemple comprise entre 1,2 et 8, en particulier entre 2 et 5, par exemple égale à 2,6.

On peut aussi impartir une tension de non tissé d'au moins 0,64 Newton (N) pour 10mm de largeur et $100gm^2$ de couche de non tissé seule, de préférence cette tension est d'au moins 0,9 $N/10mm/100gm^2$ de non tissé, plus préférablement d'au moins 1,2, par exemple comprise entre 0,65 et 3, en particulier entre 1 et 2, par exemple égale à 1,3.

Le matériau élastique peut présenter ou non des caractéristiques thermorétractables. Il peut être formé, en particulier, à partir de polymères, tels que des copolymères de différents types de motif de monomères, par exemple alterné tel que A-B, ou séquencé, par exemple A-A-A-B-B-B, ou statistique, par exemple A-A-B-A-B-B-A-A-A-B-A, dont l'ensemble du réseau obtenu peut avoir différentes structures, soit linéaires de type A-B-A, soit radiales de type (A-B)n, indice n (n>2), soit diblock de type A-B qui sont élastomères, par exemple les copolymères styrène/isoprène (SI), styrène/isoprène/styrène (SIS), styrène/butadiène/styrène (SBS), styrène-éthylène/butylène-styrène (SEBS), styrène-éthylène/propylène-styrène (SEPS) ou SIBS. Des mélanges de ces élastomères les uns avec les autres ou avec des non élastomères modifiant certaines caractéristiques autres que l'élasticité peuvent également être pris en compte. Par exemple jusqu'à 50 % en poids mais, de préférence, moins de 30 % en poids de polymère peuvent être ajoutés afin de modifier certaines caractéristiques des matériaux de base (élasticité, tenue à la chaleur, processabilité, tenue aux UV, colorant,...), tels que des polyvinyles styrène, des polystyrènes ou des poly α-méthyl-styrène, polyesters époxy, polyoléfines, par exemple des polyéthylènes ou certains acétates d'éthylène/vinyle, de préférence ceux de poids moléculaire élevé.

Le matériau élastique peut être, notamment, un styrène-isoprène-styrène, disponible par exemple auprès de la Société Kraton Polymers, sous la dénomination KRATON D(Marque déposée), ou de la société DEXCO POLYMERS LP sous la dénomination VECTOR SBC 4211 (Marque déposée). On peut également utiliser un élastomère thermoplastique de polyuréthane, notamment le PELLATHANE (Marque déposée) 2102-75A de la Société The Dow Chemical Company. On peut utiliser également un styrène-butadiène-styrène, notamment le KRATON D-2122 (Marque déposée) de la société Kraton Polymers, ou le VECTOR SBC 4461 (Marque déposée)de la société Dexco Polymers LP. On peut aussi utiliser un styrène-éthylène/butylène, notamment le KRATON G-2832 (Marque déposée) de la société Kraton Polymers, ou un copolymère séquencé styrène-éthylène-butylène-styrène (SEBS), notamment le KRATON (Marque déposée) G2703. On peut également utiliser un copolymère d'acrylate d'isooctyle et d'acide acrylique suivant des rapports de monomère de 90/10. On peut également utiliser un copolymère séquencé polyamide polyéther PEBAX (Marque déposée) 2533 de la société Arkema.

D'autres matériaux possibles sont des polymères polyoléfines, principalement des copolymères d'éthylène et/ou propylène, ayant des caractéristiques des élastomères, notamment issus de la catalyse métallocène, tel le VISTAMAXX VM-1120 (Marque déposée), disponible auprès de la société Exxon Mobil Chemical ou encore des polymères chargés EPDM du type Santoprène.

On peut, suivant l'invention, utiliser une colle telle que des colles hot melt non réactive, par exemple la H2511 de Bostick, ou une colle PU réactive, notamment la AX75E de Bostik. De préférence, ces colles auront une nature chimique similaire au film élastomère décrit ci dessus. Par exemple, si on analyse une de ces colles avec un spectromètre à Infra rouge, pour identifier les fonctions chimiques, ou une chromatographie liquide pour séparer et quantifier les substances, on retrouvera de préférence des traces d'un ou des composants ou de leurs dérivés de la matière ou des matières du film élastomère.

De préférence, ces colles sont à base de SIS, SBS, SEBS et SEPS, permettent une bonne affinité avec le film par des matières chimiques similaires.

De préférence la couche de colle a un grammage inférieur à 23g/m$^2$, plus particulièrement inférieur à 15g/m$^2$, notamment inférieur à 12g/m$^2$, plus préférablement inférieur à 8g/m$^2$.

Concernant les non tissés, on peut utiliser du polypropylène, du polyester et tous autres matériaux habituels dans le domaine ; Il est aussi possible de jouer sur l'élongation à la rupture transversale des non tissés pour faciliter au maximum l'activation.

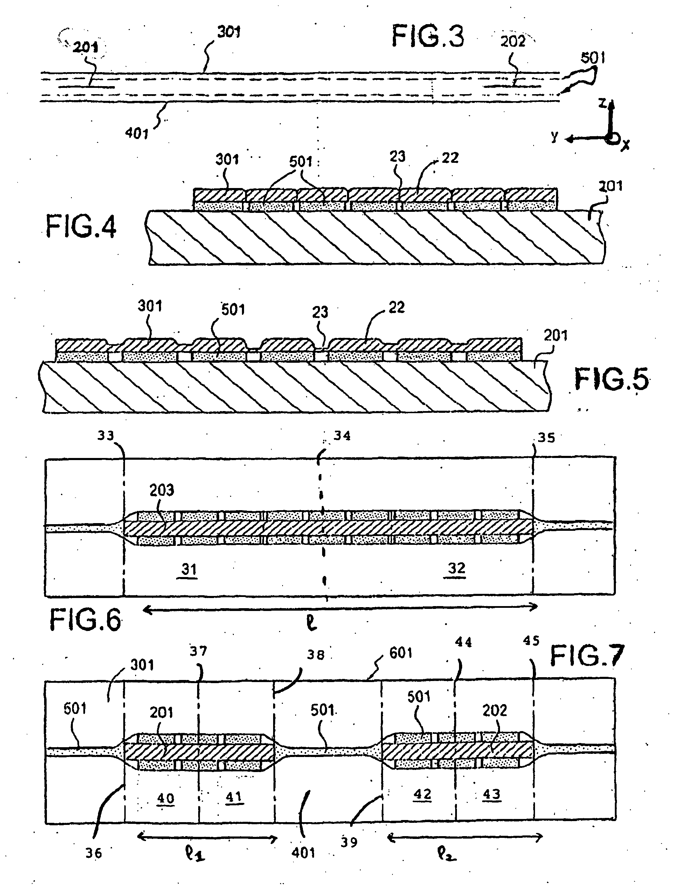

A la figure 7, il est représenté un stratifié tel qu'obtenu à la sortie du dispositif de la figure 1, après passage dans les dentures d'activation. Le complexe 601 comporte une couche de non tissé supérieure 301 et une couche de non tissé 401 entre lesquels sont pris en sandwich deux films élastiques 201 et 202 de plus petite largeur.

A la figure 3, il est représenté, suivant une vue en coupe, transversalement à la direction machine (direction des X), c'est-à-dire la direction des Y dans laquelle s'étend en longueur le stratifié de la figure 7. Ce stratifié est constitué de deux couches de non tissé 301 et 401 ayant une grande largeur, par exemple ici une largeur de 170 mm. Deux films élastomères 201 et 202 de petite largeur, par exemple de 45 à 55 mm, sont pris en sandwich entre les deux couches de non tissé. Deux couches de colle 501 fixent chaque non tissé à une des faces des films élastomères et, lorsqu'il n'y a pas de film élastomère, à l'autre non tissé.

Au niveau des films élastiques, les couches de colle ont la forme de bandes parallèles les unes aux autres, à distance les unes des autres, distance qui peut être nulle et comprise par exemple entre 0 mm et 2 mm, tandis qu'entre les non tissés, là où il n'y a pas de film élastique, la couche de colle 501 est continue.

Après formation du stratifié, les deux couches de non tissé, au niveau du au moins un film élastomère, sont activées par passage entre des rouleaux d'activation, c'est-à-dire que ces deux non tissés dans la partie recouvrant le au moins un film élastomère, sont cassés de façon préférentielle en cross direction (ou direction transversale) pour former des sortes de sillons dans le sens transversal pour que, au niveau des deux élastomères, le stratifié ait une élasticité dans la direction transversale correspondant sensiblement à celles des films élastomères.

Pour effectuer cette cassure, on fait passer le stratifié en le tenant dans sa partie centrale, où l'on souhaite effectuer la formation des sillons, par application d'une bande élastique qui plaque le stratifié en le recouvrant, et on étire ensuite le stratifié et la bande élastique qui est en contact avec lui en les déformant pour désolidariser les unes des autres les fibres du non tissé du stratifié, en cassant ainsi le non tissé, le film élastique et la bande élastique, pendant cet étirage par déformation, s'étirant simplement élastiquement. Une fois la déformation terminée, le film élastique et la bande élastique reviennent non déformés à leur position initiale, tandis que le non tissé est cassé de manière permanente.

Après la désolidarisation (décohésion des fibres les unes aux autres), les fibres du non tissés on tendance à se regrouper au niveau des bandes de colles, pour former des monticules de non tissés, tandis que entre les bandes de colle les fibres de non tissés, en raison de la cassure, se font plus rares et sont plus clairsemées. On a ainsi des zones (au niveau des bandes de colle), où le non tissé est d'une plus grande épaisseur que dans les zones intermédiaires (là où il n'y a pas de colle), où éventuellement, à l'extrême, il peut ne plus y avoir de non tissé. Dans la position non étiré du stratifié, les zones de plus grande épaisseur viennent en contact latéral (par leur bord parallèle à la direction transversale) les unes avec les autres, et, lorsqu'on étire le stratifié, les zones de plus grande épaisseur s'éloignent les unes des autres, les zones intermédiaires apparaissant alors, soit sans non tissé, soit avec une plus petite épaisseur de non tissé.

A la figure 6, qui représente le cas d'un stratifié n'ayant qu'un seul film élastique 203, Au moins une zone (notamment la totalité) de la région centrale 30 a une élasticité supérieure à l'élasticité des régions de bord 31 et 32, mesurée en une zone quelconque de ces régions de bord, notamment 10% supérieure, par exemple 20% supérieure.

A la figure 7, au moins une zone (notamment la totalité) des deux régions centrales 30 a une élasticité supérieure à l'élasticité des régions de bord 31 et 32, mesurée en une zone quelconque de ces régions de bord, notamment 10% supérieure, par exemple 20% supérieure.

A la figure 5, les bandes 501 de colle, à distance les unes des autres, et le non tissé 301 comporte des zones 22 de plus grande épaisseur (par rapport à l'épaisseur du non tissé avant cassure) et des zones 23 de plus petite épaisseur (par rapport à l'épaisseur du non tissé avant cassure) qui apparaissent mieux lorsqu'on étire le stratifié.

Le film élastique a une largeur 1 perpendiculairement au sens de dépose sur le couche de non tissé. Il a une surface, du côté du non tissé 301, de forme plane. En section longitudinale, cette surface a la forme d'une droite. Aucune fibre du non tissé n'est noyée dans la matière du film élastique, et toutes les fibres sont d'un même côté de cette droite, et ce quelle que soit la section longitudinale.

Dans le cas du stratifié de la figure 6, l'élasticité de la région 31 de gauche du stratifié est croissante du bord 33 gauche de la dite largeur activée 1 de stratifié vers le milieu 34 de cette dite largeur. L'élasticité de la région 32 de droite est décroissante du milieu 34 vers le bord droit 35. L'élasticité peut être mesurée par le test d'allongement à 10 Newton et est décrit plus loin.

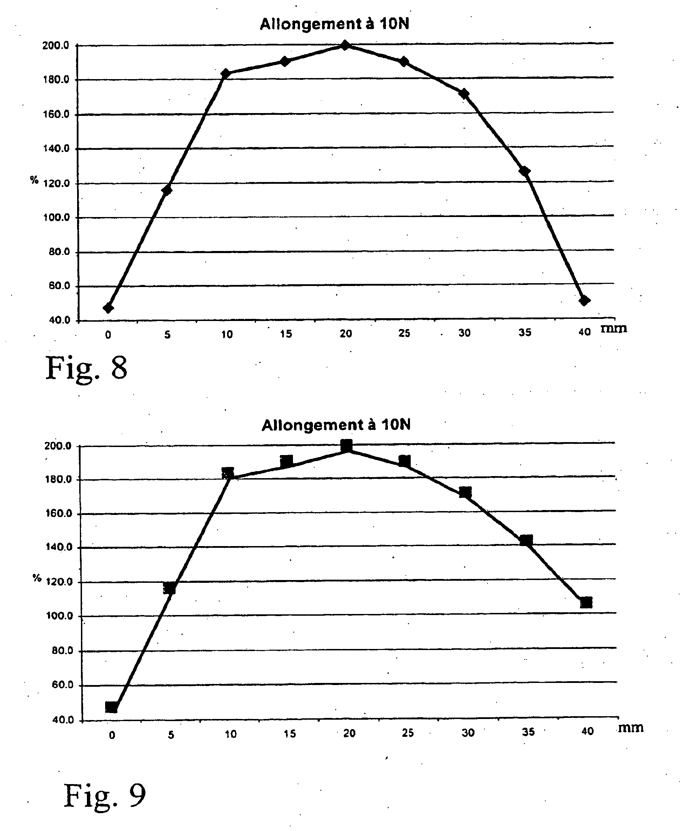

Comme on le voit à la figure 8, l'élasticité a une pente inférieure à 0,21, en étant sensiblement symétrique par rapport au centre de ladite largeur.

Dans le cas du stratifié de la figure 7, la première largeur 11 activée de stratifié a une région de gauche 40 dont l'élasticité est croissante du bord gauche 36 vers le milieu 37 et une région 41 de droite dont l'élasticité est décroissante du milieu 37 vers le bord droit 38. Comme on le voit à la figure 9, la pente (en valeur absolue) au niveau du bord gauche est supérieure à la pente au niveau du bord droit. La pente au niveau du bord gauche est inférieure à 0,21, tandis qu'au niveau du bord droit, elle est inférieure à 0,1.

la deuxième largeur 12 activée de stratifié a une région de gauche 42 dont l'élasticité est croissante du bord gauche 39 vers le milieu 44 et une région 43 de droite dont l'élasticité est décroissante du milieu 44 vers le bord droit 45. Comme on le voit à la figure 9, la pente (en valeur absolue) au niveau du bord droit est supérieure à la pente au niveau du bord gauche. La pente au niveau du bord gauche est inférieure à 0,21, tandis qu'au niveau du bord droit, elle est inférieure à 0,1. Les courbes d'élasticité dans les deux largeurs activées sont symétriques comme dans un miroir.

Le fait que l'élasticité soit plus faible au niveau des bords par rapport au milieu fait que le stratifié est plus résistant au décollement de la liaison élastomère non tissé, notamment ne se décolle qu'au bout d'un nombre d'étirements latéraux (effectués par l'utilisateur, notamment d'une couche culotte, lorsqu'il ferme la couche culotte en étirant les pattes de fermeture réalisé sur la base du stratifié de l'invention, pour s'assurer que la couche s'adapte bien élastiquement au contour du bébé) bien plus grand que pour le cas des stratifiés de l'art antérieur dont l'élasticité est sensiblement uniforme. Il en résulte que suivant l'invention, il est possible de ne pas prévoir de lignes de soudure le long des bords longitudinaux 33, 35, 36, 38, 39, 45 des stratifiés, ou de prévoir une colle à plus faible pouvoir collant. Cependant, bien évidemment, on peut choisir, sans sortir du domaine de protection de l'invention, de toujours prévoir de telles lignes de soudures ou des colles à fort pouvoir collant pour obtenir un stratifié encore plus résistant au décollement, tout autre chose égale par ailleurs.

Pour mesurer l'élasticité et réaliser la courbe d'élasticité (figure 8 et 9) par le test d'allongement à 10N, on prélève un échantillon principal en sortie d'activation de par exemple 45 mm de largeur activée et 45 mm de long et on forme 9 échantillons de mesure, chacun centré sur le point où l'on souhaite mesurer l'élasticité, chaque échantillon de mesure étant en forme d'une bande de par exemple 5mm de large sur 45 mm de long, que l'on étire à l'aide d'un dynamomètre à mâchoires (notamment celui indiqué ci dessous), à partir de la longueur initiale non étirée, avec une force de 10 N, à une température ambiante de 23°C à +/-2°, une humidité relative de 50%, à +/- 5% et une pression atmosphérique normale. On mesure alors l'allongement obtenu en pourcentage. De préférence, on prélève trois ou plus échantillons principaux pour faire les mesures plusieurs fois (au moins trois fois) et on prend la valeur moyenne pour chaque valeur d'élasticité reportée aux graphes des figures 8 ou 9.

En chaque point de mesure on calcule la pente de la courbe d'élasticité en le point de mesure (nécessairement positive, l'horizontale n'ayant pas de pente) comme étant le rapport de la différence entre la valeur de l'élasticité mesurée en le point de mesure et la valeur de l'élasticité mesurée en le point de mesure précédent sur la dimension en largeur (distance entre les deux points de mesure consécutifs) de l'échantillon de mesure.

On peut aussi par exemple mesurer l'élasticité d'un stratifié en en déterminant la rémanence par le test suivant :

On conditionne l'échantillon dans une atmosphère normale, telle que définie dans la norme ASTDM 5170, température de 23°C ± 2°C et humidité relative de 50% ± 5%.

On utilise comme appareillage un dynamomètre conforme à la norme EN 10002, notamment le Synergie 200, 1 colonne disponible auprès de la société MTS Systems Corp, U.S.A., conjointement avec un logiciel d'utilisation TESTWORKS 4.04 B.

On prépare l'échantillon en découpant au cutter ou aux ciseaux le produit élastique (par exemple le stratifié de l'invention) en un échantillon de 45mm de largeur dans le sens MD (direction de la machine, perpendiculairement au plan de la figure 1) et une longueur dans le sens CD (direction transversale, direction horizontale à la figure 1) de 60mm.

On positionne des renforts (anti-glissement) par exemple une couche de non tissé, pour éviter le glissement et l'amorce de rupture de l'échantillon entre les mâchoires en les fixant avec du double face de part et d'autre de la zone élastique à tester et de chaque côté, comme représenté schématiquement à la figure 3 ;

Les paramètres sont sélectionnés comme suit :

Distance inter mâchoires : 20mm
Vitesse machine : 254 mm/mn
Nombre de cycles : 2
Allongement du produit : 100% à vitesse constante

On étire le produit à 100% par déplacement vertical de la mâchoire supérieure, la mâchoire inférieure étant fixe, puis on le maintient dans la position pendant 30 secondes, puis on revient à la position initiale à vitesse constante où on le laisse 60 secondes (fin du premier cycle), puis on l'étire de nouveau à 100%, on le maintient pendant 30 secondes et on revient à la position initiale (fin du deuxième cycle). On obtient alors la courbe donnant la force d'étirement en fonction de l'allongement en %, celle-ci présentant une hystérésis qui permet de déterminer le Set par la formule de calcul suivante :

$$SET = L1 - L0$$

Avec :

L0 : Point d'intersection avec l'axe des X (Allongement en %) lors du démarrage du test, soit le début du premier cycle.

L1 : Point d'intersection avec l'axe des X (Allongement en %) lors du démarrage du deuxième cycle après le retour à la position d'origine et l'attente de 60 secondes.

Lorsque l'on a obtenu le stratifié, on le soumet ensuite à une activation, c'est à dire que l'on libère les capacités élastiques du film élastique emprisonné entre les deux non tissés, qui ne sont pas élastiques. Dans le cas de la présente invention, l'aspect des non tissés après l'activation est peu modifié, de même que la largeur du film et ses propriétés élastiques. En particulier les non tissés sont plus doux au toucher, et irrite moins la peau du porteur de la couche.

Un non tissé est une surface textile obtenue par le liage mécanique et/ou chimique et/ou thermique de fibres textiles disposées en nappes, en excluant le tissage ou le tricotage (cf Lexique des fils et des étoffes, ISBN :2-9509924-1-2).

Ainsi, un non tissé est un amas de fibres de petites dimensions qui sont associées les unes aux autres par compactage mécanique, par mélange avec un liant ou par fusion partielle du non tissé. Lorsque l'on étire le non tissé suivant l'invention pour l'activer, on sépare les petites fibres compactées les unes aux autres pour les désolidariser les unes des autres. Cette désolidarisation entraîne une cassure du non tissé. Les fibres ne sont pas nécessairement étirées et d'ailleurs en général, compte tenu de leur taille, ne le sont pas. Si on veut les étirer, on peut éventuellement utiliser un système d'activation dit par « incrément ». Cependant, ce système nécessite une installation complexe, avec des rouleaux dentées qui engrènent les un dans les autres, et on peut s'en dispenser.

On entend suivant l'invention par film ou stratifié élastique un film ou un stratifié qui a, suivant le test précédent, une rémanence ou SET inférieure à 15%, de préférence inférieure à 10%, plus préférablement inférieure à 5% pour un étirement de 100% de sa largeur initiale.

On entend par matière élastique une matière telle qu'un film, constitué uniquement de cette matière, est élastique. L'élasticité est la propriété physique d'un corps de reprendre sa forme initiale après suppression de la sollicitation.

**Revendications**

1. Stratifié comportant au moins une couche de non tissé (301,401) et au moins un film élastique (201, 202 ; 203) ayant une largeur (l1, l2) et fixé à la dite au moins une couche, notamment par interposition d'un liant, notamment de la colle, le stratifié en section transversale, dans la dite largeur, ayant une largeur activée inférieure ou égale à la dite largeur et dans laquelle il a été activé, la largeur activée ayant une région (31 ; 40 ; 42) de gauche et une région (32 ; 41 ; 43) de droite, l'élasticité du stratifié, mesurée notamment par le test de l'allongement à 10 Newton, étant croissante à partir du bord (33 ;36 ; 39) gauche de la largeur activée sur au moins une partie de la région de gauche et décroissante sur au moins une partie de la région de droite vers le bord droit (35 ; 38 ; 45) de la largeur activée.

2. Stratifié suivant la revendication 1, comportant deux couches de non tissé dans lequel au moins un film élastique est pris en sandwich entre les deux couches de non tissé.

3. Stratifié suivant la revendication 1 ou 2, **caractérisé en ce que** la courbe donnant l'élasticité telle que mesurée par l'allongement à 10 Newton (en% d'allongement) en fonction de la distance en mm du point de mesure au bord gauche de la dite largeur activée présente en chaque point de mesure dans la partie croissante, ou région de gauche, une pente qui est inférieure à 50 %/mm, de préférence inférieure à 25%/m, plus préférablement inférieure à 20%/mm, par exemple inférieure à 15 %/mm, par exemple comprise entre 50 et 5, par exemple comprise entre 25 et 5, notamment entre 15 et 5.

4. Stratifié suivant la revendication 1, 2 ou 3, **caractérisé en ce que** le stratifié comporte au moins deux films élastiques gauche et droit ayant chacun une largeur activée gauche et droite, la courbe d'élasticité de la largeur activée de droite étant symétrique comme dans un miroir de la courbe d'élasticité de la largeur activée de gauche, la pente en valeur absolue de la courbe d'élasticité dans la partie droite (41) de décroissance de la largeur activée gauche étant inférieure ou égale à celle de la partie gauche (40) de croissance de la largeur activée gauche.

5. Stratifié suivant la revendication 4, **caractérisé en ce que** l'élasticité dans la partie de droite (41) de décroissance de la largeur activée gauche est inférieure à 20, notamment inférieure à 12, en particulier inférieure à 10, plus particulièrement inférieure à 7.

6. Stratifié suivant l'une des revendications 1 à 5, **caractérisé en ce que** la courbe d'élasticité présente un maximum pour un point de mesure sensiblement au milieu (34 ; 37 ; 44) de ladite largeur activée de stratifié.

**Patentansprüche**

1. Laminat umfassend mindestens eine Faservlieslage (301, 401) und mindestens einen elastischen Film (201, 202 ; 203), der eine Breite (l1, l2) aufweist und an der mindestens einen Lage insbesondere unter Vermittlung eines Bindemittels, insbesondere von Klebstoff befestigt ist, wobei das Laminat im Querschnitt in dieser Breite eine aktivierte Breite aufweist, die geringer als dieser Breite oder gleich diese Breite ist und in der es aktiviert ist, wobei die aktivierte Breite einen linken Bereich (31 ; 40 ; 42) und einen rechten Bereich (32 ; 41 ; 43) aufweist, wobei die Elastizität des Laminats, die insbesondere durch den Dehnungstest mit 10 Newton ermittelt wird, vom linken Rand (33 ; 36 ; 39) des aktivierten Bereichs aus über mindestens einen Teil des linken Bereichs zunimmt und über mindestens einen Teil des rechten Bereichs zum rechten Rand (35 ; 38 ; 45) der aktivierten Breite hin abnimmt.

2. Laminat nach Anspruch 1, das zwei Faservlieslagen aufweist, wobei der mindestens eine elastische Film sandwichartig zwischen die zwei Faservlieslagen eingefügt ist.

3. Laminat nach Anspruch 1 oder 2, **dadurch gekennzeichnet, dass** die Kurve, die die Elastizität, die durch die Dehnung mit 10 Newton ermittelt wurde, (in % Dehnung) als Funktion des Abstands in mm des Messpunkts vom linken Rand der aktivierten Breite angibt, in jedem Messpunkt in dem ansteigenden Bereich oder dem linken Bereich eine Steigung aufweist, die geringer als 50% /mm, vorzugsweise geringer als 25% /m, noch besser geringer als 20 % /mm, beispielsweise geringer als 15%/mm ist, beispielsweise zwischen 50 und 5, beispielsweise zwischen 25 und 5, insbesondere zwischen 15 und 5 liegt.

4. Laminat nach Anspruch 1, 2 oder 3, **dadurch gekennzeichnet, dass** das Laminat mindestens zwei elastische Filme, einen linken und einen rechten, mit jeweils einer linken beziehungsweise rechten aktivierten Breite aufweist, wobei die Elastizitätskurve der rechten aktivierten Breite spiegelbildsymmetrisch zur Elastizitätskurve der linken aktivierten Breite ist, wobei der Absolutwert der Steigung der Elastizitätskurve in dem eine Abnahme zeigenden rechten Teil (41) der linken aktivierten Breite geringer als der oder gleich dem des eine Zunahme zeigenden linken Teils (40) der linken aktivierten Breite ist.

5. Laminat nach Anspruch 4, **dadurch gekennzeichnet, dass** die Elastizität in dem eine Abnahme zeigenden rechten Teil (41) der linken aktivierten Breite geringer als 20, insbesondere geringer als 12, vorzugsweise geringer als 10, noch besser geringer als 7 ist.

6. Laminat nach einem der Ansprüche 1 bis 5, **dadurch gekennzeichnet, dass** die Elastizitätskurve ein Maximum für einen Messpunkt im wesentlichen in der Mitte (34 ; 37 ; 44) der aktivierten Breite des Laminats zeigt.

## Claims

1. Laminate comprising at least one ply of non-woven material (301, 401) and at least one elastic film (201; 202; 203) having a width (11, 12) and secured to said at least one ply, particularly through interposition of a bonding material, particularly glue, whereby the laminate in transverse section, in said width, has an activated width less than or equal to said width and in which it has been activated, whereby the activated width has a left region (31; 40; 42) and a right region (32; 41; 43), the elasticity of the laminate, measured in particular by the elongation test at 10 Newton, increasing from the left edge (33; 36; 39) of the activated width over at least a part of the left region and decreasing over at least a part of the right region towards the right edge (35; 38; 45) of the activated width.

2. Laminate according to claim 1, comprising two plies of non woven material between which said at least one elastic film is sandwiched.

3. Laminate according to claim 1 or 2, **characterised in that** the curve reproducing the elasticity such as measured by the elongation at 10 Newton (in % elongation) as a function of the distance in mm from the measuring point of the left edge of said activated width presents in each measuring point in the increasing section, or left region, a gradient which is less than 50%/mm, preferably less than 25%/m, more preferably less than 20%/mm, for example less than 15%/mm, for example between 50 and 5, for example between 25 and 5, particularly between 15 and 5.

4. Laminate according to claim 1, 2 or 3, **characterised in that** the laminate comprises at least two left and right elastic films, each having a left and right activated width, whereby the elasticity curve of the right activated width is mirror symmetrical to the elasticity curve of the left activated width, the gradient in absolute value of the elasticity curve in the right decreasing section of the left activated width being less than or equal to that of the left increasing section of the left activated width.

5. Laminate according to claim 4, **characterised in that** the elasticity in the right decreasing section (41) of the left activated width is less than 20, particularly less than 12, more particularly less than 10, even more particularly less than 7.

6. Laminate according to one of the claims 1 to 5, **characterised in that** the elasticity curve has a maximum for a measuring point essentially in the middle (34; 37; 44) of said activated width of the laminate.

Fig. 1

Fig. 2

FIG.3

FIG.4

FIG.5

FIG.6

FIG.7

Fig. 8

Fig. 9

**EP 1 849 599 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5167897 A